# FASCICULE DE BREVET EUROPEEN

(11) **EP 4 222 362 B1**
(45) Date de publication et mention de la délivrance du brevet: **13.11.2024**
(21) Numéro de dépôt: 21798079.6
(22) Date de dépôt: 28.09.2021
(51) Int. Cl.: F02C 7/32, F02C 9/30, F02C 7/22, H02K 17/30

(54) **DISPOSITIF D'ACTIONNEMENT DE POMPE, SYSTÈME DE POMPAGE, AÉRONEF ET PROCÉDÉ D'ALIMENTATION EN CARBURANT ASSOCIÉS**
PUMPENBETÄTIGUNGSVORRICHTUNG UND ZUGEHÖRIGES PUMPSYSTEM, FLUGZEUG UND KRAFTSTOFFVERSORGUNGSVERFAHREN
PUMP ACTUATING DEVICE, AND ASSOCIATED PUMPING SYSTEM, AIRCRAFT AND FUEL SUPPLY METHOD

(30) Priorité: 29.09.2020 FR 2009935
(43) Date de publication de la demande: 09.08.2023
(73) Titulaire: SAFRAN AIRCRAFT ENGINES, 75015 Paris (FR)
(72) Inventeur: DE WERGIFOSSE, Huguette, 77550 MOISSY-CRAMAYEL (FR); DUPAYS, Clément, 77550 MOISSY-CRAMAYEL (FR)
(74) Mandataire: Brevalex
(86) Numéro de dépôt international: PCT/FR2021/051668
(87) Numéro de publication internationale: WO 2022/069828

(56) Documents cités:
- EP-A1- 2 940 272
- EP-A2- 2 088 302
- FR-A1- 2 934 321

## Description

### DOMAINE TECHNIQUE

La présente invention concerne un dispositif d'actionnement destiné à entraîner au moins une pompe d'un système de pompage de carburant d'un circuit de carburant vers un dispositif d'injection de carburant d'un moteur.

L'invention concerne également un système de pompage, un aéronef embarquant un tel système de pompage, et un procédé d'alimentation en carburant pour un tel aéronef.

L'invention s'applique au domaine de l'aéronautique, en particulier à l'alimentation en carburant d'un moteur d'aéronef.

### ÉTAT DE LA TECHNIQUE ANTÉRIEURE

Il est connu d'utiliser, à bord d'un aéronef, au moins une pompe pour acheminer du carburant depuis un réservoir de carburant de l'aéronef vers un dispositif d'injection de carburant d'un moteur de l'aéronef. Une telle pompe, généralement une pompe volumétrique, est, classiquement, actionnée au moyen d'un circuit hydraulique de l'aéronef.

Dans le cadre de l'électrification de certains actionneurs d'aéronef, dont les lignes d'acheminement de carburant, il a été proposé d'entraîner la pompe précédemment décrite grâce à une machine électrique tournante. Plus précisément, il a été proposé de fournir une première machine électrique tournante, dite « génératrice », et une deuxième machine électrique tournante, dite « motrice », électriquement reliées entre elles. Dans ce cas, l'arbre de sortie de la motrice est couplé à la pompe pour son entraînement, et l'arbre de la génératrice est couplé à un arbre du moteur de l'aéronef. La génératrice et la motrice sont typiquement des machines triphasées, en particulier une machine asynchrone pour la motrice et une machine asynchrone ou synchrone pour la génératrice. De cette façon, lors du fonctionnement du moteur de l'aéronef, la génératrice délivre des courants dont la fréquence est proportionnelle à la vitesse de rotation du moteur de l'aéronef (également appelée « régime »). Il en résulte que la vitesse de rotation en sortie de la motrice est proportionnelle au régime du moteur (au glissement près), de sorte que la pompe est entraînée pour délivrer du carburant avec un débit proportionnel au régime du moteur.

Toutefois, un tel dispositif d'actionnement de pompe ne donne pas entière satisfaction.

En effet, afin que le moteur soit convenablement alimenté en carburant quel que soit son régime, la pompe entraînée par un tel dispositif d'actionnement est dimensionnée de sorte que, pour un régime donné quelconque, le débit fourni par la pompe soit au moins égal au débit requis par le moteur pour ledit régime. Un tel dimensionnement consiste généralement en le choix d'une pompe de cylindrée appropriée.

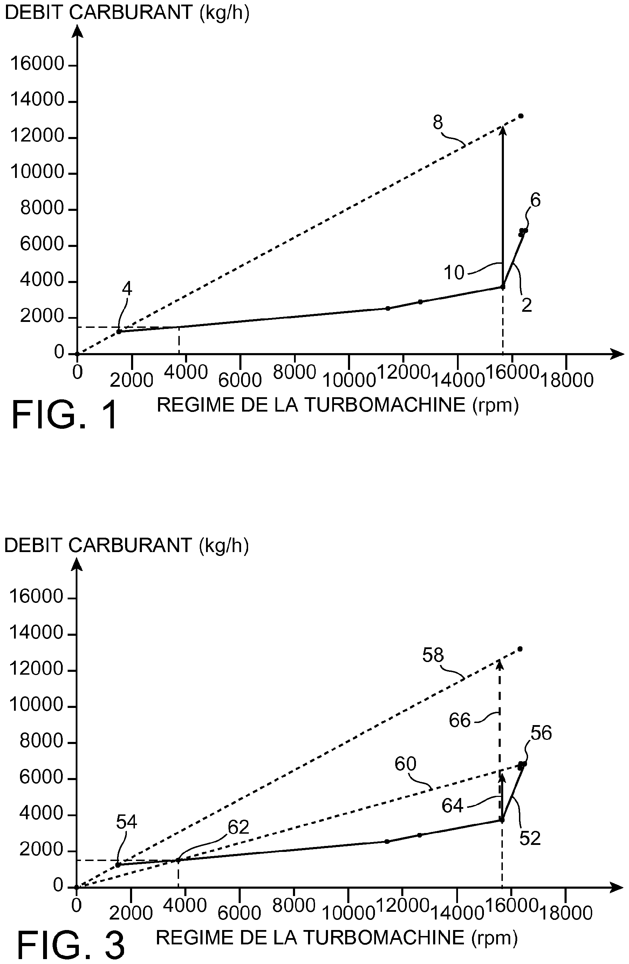

Or, comme illustré par la figure 1, la courbe 2 d'évolution du débit de carburant requis par le moteur en fonction de son régime est généralement une courbe croissante concave. Dans ce cas, la cylindrée est imposée par le point de fonctionnement qui présente le plus grand rapport entre le débit de carburant requis et le régime du moteur, parmi le point de fonctionnement de plus bas régime (correspondant à une phase d'autorotation d'une soufflante du moteur, ou « *windmilling* » en anglais), illustré par le point 4, et le point de fonctionnement de régime le plus élevé (correspondant à une phase de décollage, ou « *take-off* » en anglais), illustré par le point 6.

Dans le cas où la cylindrée est imposée par le point de fonctionnement de plus bas régime 4, le débit de carburant fourni par la pompe, symbolisé par la droite 8 qui passe par le point de fonctionnement de plus bas régime 4, est toujours supérieur au débit de carburant requis par le moteur. Par exemple, au point de fonctionnement de régime le plus élevé 6, le débit de carburant excédentaire est symbolisé par la flèche 10. Dans ce cas, la mise en place d'un dispositif de recirculation de carburant est nécessaire.

Lors de son fonctionnement, un tel dispositif de recirculation, généralement connecté en sortie d'un boîtier d'engrenages du moteur, prélève de la puissance mécanique en sortie dudit boîtier d'engrenages, et dissipe une partie de la puissance mécanique prélevée sous forme de chaleur. Or, une telle dissipation thermique est préjudiciable car le circuit carburant (qui comprend le dispositif d'injection) est utilisé comme une source froide pour le circuit huile. Toute dissipation thermique a un impact négatif sur la taille des échangeurs.

Des dispositifs d'actionnement selon l'état de la technique sont connus de EP 2 940 272 A1 et FR 2 934 321 A1.

Un but de l'invention est donc de proposer un dispositif d'actionnement de pompe qui, pour un point de fonctionnement donné quelconque du moteur, entraîne un écart moins important entre le débit de carburant requis pour ledit point de fonctionnement et le débit de carburant fourni par la pompe, c'est-à-dire qui réduit le besoin de recirculation de carburant.

### EXPOSÉ DE L'INVENTION

A cet effet, selon la revendication 1, l'invention a pour objet un dispositif d'actionnement de pompe du type précité, comportant une machine électrique tournante motrice, une machine électrique tournante génératrice, un onduleur d'énergie électrique, un organe de commutation et un organe de commande,
la machine électrique tournante motrice comprenant un premier rotor, destiné à être mécaniquement couplé à l'au moins une pompe pour son actionnement, et un premier stator comprenant au moins un enroulement statorique d'entrée,
la machine électrique tournante génératrice comprenant un deuxième rotor, destiné à être mécaniquement couplé à un arbre du moteur formant un arbre d'entraînement, et un deuxième stator comprenant au moins un enroulement statorique de sortie, chaque enroulement statorique de sortie étant associé à un enroulement statorique d'entrée respectif de la machine électrique tournante motrice,
l'onduleur comprenant au moins une sortie, chaque sortie de l'onduleur étant associée à un enroulement statorique d'entrée respectif de la machine électrique tournante motrice,
l'organe de commande étant configuré pour recevoir une information de régime relative à un régime du moteur, et pour commander l'organe de commutation afin de connecter sélectivement chaque enroulement statorique d'entrée de la machine électrique tournante motrice :
   - à l'enroulement statorique de sortie correspondant si le régime du moteur est supérieur ou égal à un régime prédéterminé ;
   - à la sortie correspondante de l'onduleur, sinon.

En effet, un tel dispositif d'actionnement autorise de choisir le point de fonctionnement de régime le plus élevé pour le dimensionnement de la pompe (en particulier pour le choix de sa cylindrée), même lorsque le plus grand rapport entre le débit de carburant requis et le régime du moteur correspond au point de fonctionnement de plus bas régime. Dans ce cas, l'organe de commande, par son action sur l'organe de commutation, autorise deux modes de fonctionnement distincts :
- pour un régime supérieur ou égal au régime associé à un point de fonctionnement prédéterminé, dit « de commutation », la machine électrique tournante motrice est connectée à la machine électrique tournante génératrice pour être entraînée à une vitesse de rotation proportionnelle au régime du moteur ; et
- en deçà du régime associé au point de commutation, la machine électrique tournante motrice est connectée au convertisseur, susceptible d'être commandé selon une loi de commande propre à faire tourner la machine électrique tournante motrice pour être entraînée à une vitesse de rotation suffisante pour alimenter le moteur en carburant avec, pour chaque point de fonctionnement en deçà du point de commutation, un débit de carburant au moins égal au débit de carburant requis pour ledit point de fonctionnement.

Le point de commutation correspond, en particulier, au point d'intersection entre, d'une part, la courbe du débit de carburant requis par le moteur en fonction de son régime, et, d'autre part, la droite représentative de la fonction linéaire reliant le débit de carburant fourni par la pompe issue du dimensionnement avec le régime du moteur.

Il résulte de ce qui précède que, grâce au dispositif d'actionnement selon l'invention, l'écart entre le débit de carburant requis pour un point de fonctionnement donné quelconque du moteur de l'aéronef et le débit de carburant fourni par la pompe est moins important que celui obtenu au moyen des dispositifs d'actionnement connus. Le besoin de recirculation de carburant est donc bien réduit.

Suivant d'autres aspects avantageux de l'invention, le dispositif d'actionnement comporte une ou plusieurs des caractéristiques suivantes:
- la machine électrique tournante motrice est une machine asynchrone, et/ou la machine électrique tournante génératrice est une machine synchrone à aimants permanents ou une machine asynchrone ;
- l'organe de commande est configuré pour piloter le fonctionnement de l'onduleur selon une loi de commande prédéterminée fonction du régime du moteur ;
- l'organe de commande est configuré pour recevoir une information de vitesse relative à une vitesse d'entraînement courante à laquelle est entraînée chaque pompe, l'organe de commande étant également configuré pour, lorsque le régime du moteur est inférieur au régime prédéterminé :
   - comparer la vitesse d'entraînement courante à une vitesse d'entraînement cible prédéterminée ;
   - commander l'onduleur afin de délivrer, pour chaque enroulement statorique d'entrée correspondant, une tension dont la fréquence et l'amplitude dépendent chacune d'une différence entre la vitesse d'entraînement courante et la vitesse d'entraînement cible ;
- la vitesse d'entraînement cible suit un profil temporel prédéterminé, ou est une constante prédéterminée ;
- l'organe de commande est configuré pour commander l'onduleur suivant une loi de commande dite « V sur f » ;
- l'organe de commande est configuré pour commander l'onduleur de sorte qu'une fréquence d'une tension d'alimentation de la machine électrique tournante motrice délivrée par l'onduleur présente une évolution temporelle prédéterminée.

En outre, l'invention a pour objet un système de pompage de carburant comportant au moins une pompe et un dispositif d'actionnement tel que défini ci-dessus, le premier rotor de la machine électrique tournante motrice étant mécaniquement couplé à chaque pompe pour son actionnement.

En outre, l'invention a pour objet un aéronef embarquant un système de pompage de carburant tel que défini ci-dessus, chaque pompe étant insérée entre un circuit de carburant de l'aéronef et un organe d'injection de carburant d'un moteur de l'aéronef, le deuxième rotor de la machine électrique tournante génératrice étant mécaniquement couplé à un arbre du moteur.

Selon la revendication 10, l'invention a également pour objet un procédé d'alimentation en carburant d'un moteur d'un aéronef tel que défini ci-dessus, le procédé d'alimentation comportant la connexion sélective de chaque enroulement statorique d'entrée de la machine électrique tournante motrice :
- à l'enroulement statorique de sortie correspondant si le régime du moteur est supérieur ou égal à un régime prédéterminé ;
- à la sortie correspondante de l'onduleur, sinon.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
[Fig. 1] la figure 1 est un graphique représentant le besoin en carburant d'un moteur en fonction d'une vitesse de rotation de son arbre haute pression ;
[Fig. 2] la figure 2 est une représentation schématique d'un système de pompage selon l'invention ; et
[Fig. 3] la figure 3 est similaire à la figure 1, l'évolution du débit de carburant fourni par le système de pompage de la figure 2 étant également représentée.

### EXPOSÉ DÉTAILLÉ DE MODES DE RÉALISATION PARTICULIERS

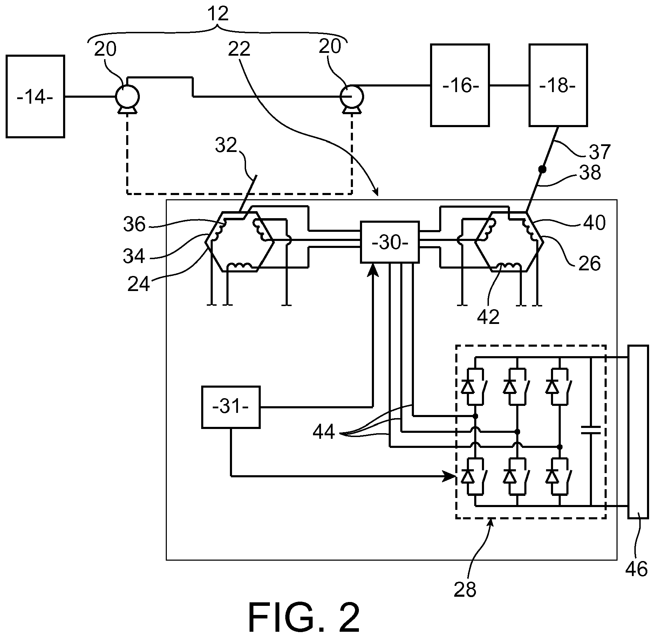

Un système 12 de pompage de carburant, en particulier pour un moteur d'aéronef, selon l'invention est illustré par la figure 2.

Le système de pompage 12 est destiné à acheminer du carburant depuis un réservoir de carburant 14 d'un aéronef (non représenté) vers un dispositif 16 d'injection de carburant d'un moteur 18 de l'aéronef.

Plus précisément, le système de pompage 12 comporte au moins une pompe 20, destinée à être agencée entre le réservoir de carburant 14 et le dispositif d'injection 16, et un dispositif d'actionnement 22 pour entraîner la ou chaque pompe 20.

Le dispositif d'actionnement 22 comporte une machine électrique tournante motrice 24 (dite « motrice »), une machine électrique tournante génératrice 26 (dite « génératrice »), un onduleur 28, un organe de commutation 30 et un organe de commande 31.

La motrice 24 est configurée pour recevoir de l'énergie électrique depuis la génératrice 26 ou depuis l'onduleur 28, et pour convertir l'énergie électrique reçue en énergie mécanique destinée à actionner la ou chaque pompe 20.

La motrice 24 comprend un rotor 32 (dit « premier rotor ») et un stator 34 (dit « premier stator »).

Le premier rotor 32 est mécaniquement couplé à au moins une pompe 20 pour causer son actionnement.

Le premier stator 34 comporte au moins un enroulement 36, dit « enroulement statorique d'entrée », par exemple trois enroulements statoriques d'entrée 36.

Comme cela sera décrit par la suite, chaque enroulement statorique d'entrée 36 de la motrice 24 est associé à la fois à un enroulement statorique de sortie 42 de la génératrice 26, et à une sortie 44 de l'onduleur 28.

La génératrice 26 est configurée pour prélever de l'énergie mécanique au niveau d'un arbre 37 du moteur 18 (dit « arbre d'entraînement »), et pour convertir l'énergie mécanique prélevée en énergie électrique. L'arbre d'entraînement 37 est, par exemple, l'arbre basse pression du moteur 18.

La génératrice 26 comprend un rotor 38 (dit « deuxième rotor ») et un stator 40 (dit « deuxième stator »).

Le deuxième rotor 38 est mécaniquement couplé à l'arbre d'entraînement du moteur au moyen de tout organe mécanique de transmission adapté tel qu'un réducteur.

Le deuxième stator 40 comporte au moins un enroulement 42, dit « enroulement statorique de sortie », par exemple trois enroulements statoriques de sortie 42. Chaque enroulement statorique de sortie 42 est associé à un enroulement statorique d'entrée 36 respectif.

La motrice 24 est une machine asynchrone. En outre, la génératrice 26 est, de préférence une machine synchrone à aimants permanents ou une machine asynchrone.

L'onduleur 28 comporte une pluralité de sorties 44, chacune associée à un enroulement statorique d'entrée 36 respectif de la motrice 24. En outre, l'onduleur 28 est connecté, en entrée, à une source de bord 46 d'énergie électrique.

L'onduleur 28 est configuré pour prélever de l'énergie électrique depuis la source de bord 46, et pour fournir, au niveau de chacune de ses sorties 44, à partir de l'énergie électrique prélevée, un courant présentant des caractéristiques prédéterminées.

La source de bord 44 est, notamment, un bus de tension continue de l'aéronef, ou encore un réseau alternatif de l'aéronef couplé à un redresseur. On adjoint ensuite un onduleur de tension triphasé dont les interrupteurs de puissance sont pilotés de manière à démarrer la machine puis à l'entrainer à vitesse fixe prédéterminée.

Le fonctionnement de l'onduleur 28, et en particulier sa loi de commande, sera détaillé plus précisément par la suite.

L'organe de commutation 30 est relié en entrée à chaque enroulement statorique de sortie 42 de la génératrice 26 et à chaque sortie 44 de l'onduleur 28. En outre, l'organe de commutation 30 est relié, en sortie, à chaque enroulement statorique d'entrée 36 de la motrice 24.

L'organe de commutation 30 est configuré pour connecter sélectivement, en fonction d'un signal de commande reçu en provenance de l'organe de commande 31, chaque enroulement statorique d'entrée 36 de la motrice 24 à l'enroulement statorique de sortie 42 correspondant ou à la sortie 44 correspondante de l'onduleur 28.

L'organe de commutation 30 est, par exemple, réalisé au moyen de relais, de contacteurs ou d'interrupteurs électroniques.

Comme décrit précédemment, l'organe de commande 31 est configuré pour commander la commutation de l'organe de commutation 30.

Plus précisément, l'organe de commande 31 est configuré pour recevoir une information de régime relative à un régime du moteur 18, et pour délivrer le signal de commande en fonction de l'information de régime. Une telle information de régime est, par exemple, la vitesse de rotation d'un arbre du moteur 18, notamment l'arbre d'entraînement 37. Selon un autre exemple, l'information de régime est une information représentative d'une phase de vol de l'aéronef, ou encore des instructions de pilotage de l'aéronef.

L'organe de commande 31 est également configuré pour commander l'organe de commutation 30 afin de connecter chaque enroulement statorique d'entrée 36 de la motrice 24 à l'enroulement statorique de sortie 42 correspondant de la génératrice 26 lorsqu'il résulte de l'information de régime que le moteur 18 se trouve dans un régime au-delà d'un régime de commutation prédéterminé.

En outre, l'organe de commande 31 est configuré pour commander l'organe de commutation 30 afin de connecter chaque enroulement statorique d'entrée 36 de la motrice 24 à la sortie 44 correspondante de l'onduleur 28 lorsqu'il résulte de l'information de régime que le moteur 18 se trouve dans un régime en-deçà du régime de commutation prédéterminé.

Le régime de commutation va maintenant être décrit, en référence à la figure 3.

Sur cette figure 3, la courbe 52 représente l'évolution du débit de carburant requis par le moteur 18 en fonction de son régime. La courbe 52 s'étend du point 54, qui est le point de fonctionnement de plus bas régime du moteur 18, au point 56, qui est le point de fonctionnement de régime le plus élevé.

Le point 54 est associé à un point de fonctionnement pour lequel le rapport entre le débit de carburant requis et le régime du moteur 18 est plus élevé que le rapport entre le débit de carburant requis et le régime du moteur associé au point 56.

Comme indiqué précédemment, une telle courbe est généralement croissante avec le régime et sensiblement concave.

La droite 58, qui passe par le point de fonctionnement de plus bas régime 54, représente le débit de carburant de la pompe 20 lorsque :
- chaque enroulement statorique d'entrée 36 de la motrice 24 est connecté à l'enroulement statorique de sortie 42 correspondant de la génératrice 26 ; et
- la cylindrée de la pompe 20 est choisie de sorte que, au point 54, le débit de carburant fourni par la pompe 20 soit au moins égal au débit de carburant requis par le moteur.

En outre, la droite 60, qui passe par le point de fonctionnement de régime le plus élevé 56, représente le débit de carburant de la pompe 20 lorsque :
- chaque enroulement statorique d'entrée 36 de la motrice 24 est connecté à l'enroulement statorique de sortie 42 correspondant de la génératrice 26 ; et
- la cylindrée de la pompe 20 est choisie de sorte que, au point 56, le débit de carburant fourni par la pompe 20 soit au moins égal au débit de carburant requis par le moteur 18.

Comme cela apparaît sur la figure 3, pour tout régime supérieur au régime associé au point 62 d'intersection de la droite 60 avec la courbe 52, la pompe 20 est apte à fournir du carburant au moteur 18 avec un débit supérieur ou égal au débit requis par le moteur. Ledit point d'intersection forme le point de commutation, le régime associé étant dit « régime de commutation ».

Il apparaît sur cette figure que, au-delà du régime de commutation, le besoin en recirculation de carburant lorsque la pompe 20 est entraînée pour fournir du carburant au dispositif d'injection 16 avec un débit qui suit la droite 60 (flèche 64) est significativement réduit par rapport au besoin en recirculation de carburant dans la situation où la pompe 20 est entraînée pour fournir du carburant au dispositif d'injection 16 avec un débit qui suit la droite 58 (flèche 66).

En variante, le régime de commutation est un régime prédéterminé distinct du régime correspondant au point de fonctionnement 62 précédemment décrit.

Avantageusement, l'organe de commande 31 est configuré pour piloter le fonctionnement de l'onduleur 28. En particulier, l'organe de commande 31 est configuré pour piloter le fonctionnement de l'onduleur 28 selon une loi de commande prédéterminée lorsque le régime du moteur 18 est inférieur au régime de commutation (c'est-à-dire la situation dans laquelle l'organe de commande 31 commande l'organe de commutation 30 de sorte que chaque enroulement statorique d'entrée 36 de la motrice 24 soit connecté à la sortie 44 correspondante de l'onduleur 28).

Plus précisément, dans ce cas, l'organe de commande 31 est configuré pour piloter le fonctionnement de l'onduleur 28 pour l'amener à délivrer, au niveau de ses sorties 44, des courants destinés à entraîner la motrice 24 à une vitesse de rotation cible.

La vitesse de rotation cible est telle que la pompe 20, par l'intermédiaire de la motrice 24, délivre du carburant au moteur 18 avec un débit au moins égal au débit requis par le moteur 18, pour le régime considéré.

Pour ce faire, l'organe de commande 31 est configuré, selon une première variante, pour piloter le fonctionnement de l'onduleur 28 selon un mode dit « avec régulation de vitesse ».

Plus précisément, dans le cas du mode avec régulation de vitesse, l'organe de commande 31 est configuré pour recevoir, depuis un capteur (non représenté) approprié, une information de vitesse relative à la vitesse à laquelle est entraînée la ou chaque pompe 20, par exemple une information relative à la vitesse de rotation du premier rotor 32 de la motrice 24.

En outre, l'organe de commande 31 est configuré pour comparer la vitesse d'entraînement mesurée, c'est-à-dire la vitesse d'entraînement courante, à une vitesse d'entraînement cible de la pompe 20. Une telle vitesse d'entraînement cible suit, par exemple, un profil temporel prédéterminé, ou est une constante prédéterminée.

Le profil temporel prédéterminé et/ou la constante prédéterminée dépendent du régime courant du moteur 18.

L'organe de commande 31 est également configuré pour commander l'onduleur 28, à partir de la différence entre la vitesse d'entraînement mesurée et la vitesse d'entraînement cible de la pompe 20, de façon à réduire ladite différence. Une telle commande constitue donc une régulation en boucle fermée.

En particulier, l'organe de commande 31 est configuré pour agir sur la fréquence de la tension d'alimentation de la motrice 24 en pilotant l'onduleur 28 en fonction de la différence entre la vitesse d'entraînement mesurée à la vitesse d'entraînement cible de la pompe 20. En outre, l'organe de commande 31 est configuré pour commander l'onduleur 28 de façon à agir sur l'amplitude de la tension d'alimentation de la motrice 24 suivant une loi de commande dite « V sur f » connue, et ce afin d'assurer un flux magnétique constant au niveau d'un entrefer de la motrice 24.

Avantageusement, l'organe de commande 31 est également configuré pour commander l'onduleur 28 afin de compenser l'effet de résistance statorique à bas régime des enroulements statoriques d'entrée 36, afin d'améliorer les performances de la motrice 24.

Selon une deuxième variante, en l'absence de capteur de vitesse de rotation du premier rotor 32, l'organe de commande 31 est configuré pour piloter l'onduleur 28 selon un mode dit « à régime fixe ».

Plus précisément, dans le mode à régime fixe, l'organe de commande 31 est configuré pour commander l'onduleur 28 afin de délivrer, à destination de la motrice 24, une tension d'alimentation dont la fréquence est prédéterminée. En outre, l'organe de commande 31 est configuré pour commander l'onduleur 28 de façon à agir sur l'amplitude de la tension d'alimentation de la motrice 24 suivant une loi de commande dite « V sur f » connue, et ce afin d'assurer un flux magnétique constant au niveau de l'entrefer de la motrice 24.

Par exemple, l'organe de commande 31 est configuré de sorte que la fréquence prédéterminée de la tension d'alimentation de la motrice 24 présente une évolution temporelle prédéterminée.

Avantageusement, l'organe de commande 31 est également configuré pour commander l'onduleur 28 afin de compenser l'effet de résistance statorique à bas régime des enroulements statoriques d'entrée 36, afin d'améliorer les performances de la motrice 24.

Il ressort donc de ce qui précède que, dans chacun des modes précédemment décrits, l'organe de commande 31 est configuré pour piloter l'onduleur 28 une loi de commande prédéterminée qui est fonction du régime courant du moteur 18.

Le fonctionnement du système de pompage 12 va maintenant être décrit.

Pendant le fonctionnement du moteur 18, l'organe de commande 31 reçoit une information de régime relative à un régime du moteur 18.

S'il résulte de l'information de régime que le moteur 18 se trouve dans un régime au-delà du régime de commutation prédéterminé, alors l'organe de commande 31 commande l'organe de commutation 30 afin de connecter chaque enroulement statorique d'entrée 36 de la motrice 24 à l'enroulement statorique de sortie 42 correspondant de la génératrice 26.

Dans ce cas, du fait de son dimensionnement, la pompe 20, entraînée à une vitesse proportionnelle à celle du moteur, délivre du carburant au moteur 18 suivant un débit au moins égal au débit de carburant requis par le moteur.

En outre, s'il résulte de l'information de régime que le moteur 18 se trouve dans un régime en-deçà du régime de commutation prédéterminé, alors l'organe de commande 31 commande l'organe de commutation 30 afin de connecter chaque enroulement statorique d'entrée 36 de la motrice 24 à la sortie 44 correspondante de l'onduleur 28.

Dans ce dernier cas, l'organe de commande 31 commande également l'onduleur 28 de sorte que la motrice 24 entraîne la pompe 20 à la vitesse de rotation cible correspondant au régime du moteur, de façon à ce que la pompe 20 délivre du carburant au moteur 18 suivant un débit au moins égal au débit de carburant requis par ledit moteur 18.

## Revendications

1. Dispositif d'actionnement (22) destiné à entraîner au moins une pompe (20) d'un système (12) de pompage de carburant d'un circuit de carburant (14) vers un dispositif d'injection (16) de carburant d'un moteur (18) d'un aéronef, le dispositif d'actionnement (22) comportant une machine électrique tournante motrice (24), une machine électrique tournante génératrice (26), un onduleur (28) d'énergie électrique, un organe de commutation (30) et un organe de commande (31),
la machine électrique tournante motrice (24) comprenant un premier rotor (32), destiné à être mécaniquement couplé à l'au moins une pompe (20) pour son actionnement, et un premier stator (34) comprenant au moins un enroulement statorique d'entrée (36),
la machine électrique tournante génératrice (26) comprenant un deuxième rotor (38), destiné à être mécaniquement couplé à un arbre (37) du moteur (18) formant un arbre d'entraînement, et un deuxième stator (40) comprenant au moins un enroulement statorique de sortie (42), chaque enroulement statorique de sortie (42) étant associé à un enroulement statorique d'entrée (36) respectif de la machine électrique tournante motrice (24),
l'onduleur (28) comprenant au moins une sortie (44), chaque sortie de l'onduleur (28) étant associée à un enroulement statorique d'entrée (36) respectif de la machine électrique tournante motrice (24),
**caractérisé en ce que** l'organe de commande (31) est configuré pour recevoir une information de régime relative à un régime du moteur (18), et pour commander l'organe de commutation (30) afin de connecter sélectivement chaque enroulement statorique d'entrée (36) de la machine électrique tournante motrice (24) :
- à l'enroulement statorique de sortie (42) correspondant si le régime du moteur (18) est supérieur ou égal à un régime prédéterminé ;
- à la sortie (44) correspondante de l'onduleur (28), sinon.

2. Dispositif d'actionnement (22) selon la revendication 1, dans lequel la machine électrique tournante motrice (24) est une machine asynchrone, et/ou la machine électrique tournante génératrice (26) est une machine synchrone à aimants permanents ou une machine asynchrone.

3. Dispositif d'actionnement (22) selon la revendication 1 ou 2, dans lequel l'organe de commande (31) est configuré pour piloter le fonctionnement de l'onduleur (28) selon une loi de commande prédéterminée fonction du régime du moteur (18).

4. Dispositif d'actionnement (22) selon la revendication 3, dans lequel l'organe de commande (31) est configuré pour recevoir une information de vitesse relative à une vitesse d'entraînement courante à laquelle est entraînée chaque pompe (20), l'organe de commande (31) étant également configuré pour, lorsque le régime du moteur (18) est inférieur au régime prédéterminé :
- comparer la vitesse d'entraînement courante à une vitesse d'entraînement cible prédéterminée ;
- commander l'onduleur (28) afin de délivrer, pour chaque enroulement statorique d'entrée (36) correspondant, une tension dont la fréquence et l'amplitude dépendent chacune d'une différence entre la vitesse d'entraînement courante et la vitesse d'entraînement cible.

5. Dispositif d'actionnement (22) selon la revendication 4, dans lequel la vitesse d'entraînement cible suit un profil temporel prédéterminé, ou est une constante prédéterminée.

6. Dispositif d'actionnement (22) selon la revendication 4 ou 5, dans lequel l'organe de commande (31) est configuré pour commander l'onduleur (28) suivant une loi de commande dite « V sur f ».

7. Dispositif d'actionnement (22) selon l'une quelconque des revendications 3 à 5, dans lequel l'organe de commande (31) est configuré pour commander l'onduleur (28) de sorte qu'une fréquence d'une tension d'alimentation de la machine électrique tournante motrice (24) délivrée par l'onduleur (28) présente une évolution temporelle prédéterminée.

8. Système (12) de pompage de carburant comportant au moins une pompe (20) et un dispositif d'actionnement selon l'une quelconque des revendications 1 à 7, le premier rotor (32) de la machine électrique tournante motrice (24) étant mécaniquement couplé à chaque pompe (20) pour son actionnement.

9. Aéronef embarquant un système (12) de pompage de carburant selon la revendication 8, chaque pompe (20) étant insérée entre un circuit de carburant (14) de l'aéronef et un organe d'injection de carburant (16) d'un moteur (18) de l'aéronef, le deuxième rotor (38) de la machine électrique tournante génératrice (26) étant mécaniquement couplé à un arbre (37) du moteur (18).

10. Procédé d'alimentation en carburant d'un moteur (18) d'un aéronef selon la revendication 9, le procédé d'alimentation comportant la connexion sélective de chaque enroulement statorique d'entrée (36) de la machine électrique tournante motrice (24) :
- à l'enroulement statorique de sortie (42) correspondant si le régime du moteur (18) est supérieur ou égal à un régime prédéterminé ;
- à la sortie (44) correspondante de l'onduleur (28), sinon.

## Patentansprüche

1. Betätigungsvorrichtung (22), die dazu bestimmt ist, mindestens eine Pumpe (20) eines Systems (12) zum Pumpen von Kraftstoff aus einem Kraftstoffkreislauf (14) zu einer Kraftstoffeinspritzvorrichtung (16) eines Triebwerks (18) eines Flugzeugs anzutreiben, wobei die Betätigungsvorrichtung (22) eine rotierende elektrische Antriebsmaschine (24), eine rotierende elektrische Generatormaschine (26), einen Wechselrichter (28) für elektrische Energie, ein Schaltelement (30) und ein Steuerelement (31) umfasst,
wobei die rotierende elektrische Antriebsmaschine (24) einen ersten Rotor (32), der dazu bestimmt ist, mit der mindestens einen Pumpe (20) für deren Betätigung mechanisch gekoppelt zu werden, und einen ersten Stator (34) umfasst, der mindestens eine Eingangsstatorwicklung (36) umfasst,
wobei die rotierende elektrische Generatormaschine (26) einen zweiten Rotor (38), der dazu bestimmt ist, mechanisch mit einer Welle (37) des Triebwerks (18), die eine Antriebswelle bildet, gekoppelt zu werden, und einen zweiten Stator (40) umfasst, der mindestens eine Ausgangsstatorwicklung (42) umfasst, wobei jede Ausgangsstatorwicklung (42) einer jeweiligen Eingangsstatorwicklung (36) der rotierenden elektrischen Antriebsmaschine (24) zugeordnet ist,
wobei der Wechselrichter (28) mindestens einen Ausgang (44) umfasst, wobei jeder Ausgang des Wechselrichters (28) einer jeweiligen Eingangsstatorwicklung (36) der rotierenden elektrischen Antriebsmaschine (24) zugeordnet ist,
**dadurch gekennzeichnet, dass** das Steuerelement (31) dazu konfiguriert ist, eine Drehzahlinformation in Bezug auf die Drehzahl des Triebwerks (18) zu empfangen und das Schaltelement (30) zu steuern, um jede Eingangsstatorwicklung (36) der rotierenden elektrischen Antriebsmaschine (24):
- mit der entsprechenden Ausgangsstatorwicklung (42), wenn die Drehzahl des Triebwerks (18) größer oder gleich einer vorbestimmten Drehzahl ist;
- andernfalls mit dem entsprechenden Ausgang (44) des Wechselrichters (28), selektiv zu verbinden.

2. Betätigungsvorrichtung (22) nach Anspruch 1, wobei die rotierende elektrische Antriebsmaschine (24) eine Asynchronmaschine ist und/oder die rotierende elektrische Generatormaschine (26) eine Synchronmaschine mit Permanentmagneten oder eine Asynchronmaschine ist.

3. Betätigungsvorrichtung (22) nach Anspruch 1 oder 2, wobei das Steuerelement (31) dazu konfiguriert ist, den Betrieb des Wechselrichters (28) gemäß einem vorbestimmten Steuerungsgesetz in Abhängigkeit von der Drehzahl des Triebwerks (18) zu betreiben.

4. Betätigungsvorrichtung (22) nach Anspruch 3, wobei das Steuerelement (31) dazu konfiguriert ist, eine Geschwindigkeitsinformation in Bezug auf eine aktuelle Antriebsgeschwindigkeit zu empfangen, mit der jede Pumpe (20) angetrieben wird, wobei das Steuerelement (31) außerdem für Folgendes konfiguriert ist, wenn die Drehzahl des Triebwerks (18) niedriger als die vorbestimmte Drehzahl ist:
- Vergleichen der aktuellen Antriebsgeschwindigkeit mit einer vorbestimmten Ziel-Antriebsgeschwindigkeit;
- Steuern des Wechselrichters (28), um für jede entsprechende Eingangsstatorwicklung (36) eine Spannung zu liefern, deren Frequenz und Amplitude jeweils von einer Differenz zwischen der aktuellen Antriebsgeschwindigkeit und der Ziel-Antriebsgeschwindigkeit abhängen.

5. Betätigungsvorrichtung (22) nach Anspruch 4, wobei die Ziel-Antriebsgeschwindigkeit einem vorbestimmten Zeitprofil folgt oder eine vorbestimmte Konstante ist.

6. Betätigungsvorrichtung (22) nach Anspruch 4 oder 5, wobei das Steuerelement (31) dazu konfiguriert ist, den Wechselrichter (28) gemäß einem sogenannten "V über f"-Steuerungsgesetz zu steuern.

7. Betätigungsvorrichtung (22) nach einem der Ansprüche 3 bis 5, wobei das Steuerelement (31) dazu konfiguriert ist, den Wechselrichter (28) so zu steuern, dass eine Frequenz einer vom Wechselrichter (28) gelieferten Versorgungsspannung der rotierenden elektrischen Antriebsmaschine (24) einen vorbestimmten zeitlichen Verlauf aufweist.

8. Kraftstoffpumpensystem (12), das mindestens eine Pumpe (20) und eine Betätigungsvorrichtung nach einem der Ansprüche 1 bis 7 umfasst, wobei der erste Rotor (32) der rotierenden elektrischen Antriebsmaschine (24) mit jeder Pumpe (20) für deren Betätigung mechanisch gekoppelt ist.

9. Flugzeug, das mit einem Kraftstoffpumpensystem (12) nach Anspruch 8 ausgestattet ist, wobei jede Pumpe (20) zwischen einem Kraftstoffkreislauf (14) des Flugzeugs und einem Kraftstoffeinspritzelement (16) eines Triebwerks (18) des Flugzeugs eingefügt ist, wobei der zweite Rotor (38) der rotierenden elektrischen Generatormaschine (26) mechanisch mit einer Welle (37) des Triebwerks (18) gekoppelt ist.

10. Verfahren zur Kraftstoffversorgung eines Triebwerks (18) eines Flugzeugs nach Anspruch 9, wobei das Versorgungsverfahren die selektive Verbindung jeder Eingangsstatorwicklung (36) der rotierenden elektrischen Antriebsmaschine (24):
- mit der entsprechenden Ausgangsstatorwicklung (42), wenn die Drehzahl des Triebwerks (18) größer oder gleich einer vorbestimmten Drehzahl ist;
- andernfalls mit dem entsprechenden Ausgang (44) des Wechselrichters (28), umfasst.

## Claims

1. An actuating device (22) intended to drive at least one pump (20) of a system (12) for pumping fuel from a fuel circuit (14) towards a fuel injection device (16) of an engine (18) of an aircraft, the actuating device (22) including a motor rotating electric machine (24), a generator rotating electric machine (26), an electrical energy inverter (28), a switching member (30) and a control member (31),
the motor rotating electric machine (24) comprising a first rotor (32), intended to be mechanically coupled to the at least one pump (20) for actuation thereof, and a first stator (34) comprising at least one input stator winding (36),
the generator rotating electric machine (26) comprising a second rotor (38), intended to be mechanically coupled to a shaft (37) of the engine (18) forming a drive shaft, and a second stator (40) comprising at least one output stator winding (42), each output stator winding (42) being associated to a respective input stator winding (36) of the motor rotating electric machine (24),
the inverter (28) comprising at least one output (44), each output of the inverter (28) being associated to a respective input stator winding (36) of the motor rotating electric machine (24),
**characterized in that** the control member (31) is configured to receive speed information relating to a speed of the engine (18), and to control the switching member (30) in order to selectively connect each input stator winding (36) of the motor rotating electric machine (24):
- to the corresponding output stator winding (42) if the speed of the engine (18) is higher than or equal to a predetermined speed;
- at the corresponding output (44) of the inverter (28), otherwise.

2. The actuating device (22) according to claim 1, wherein the motor rotating electrical machine (24) is an asynchronous machine, and/or the generator rotating electric machine (26) is a permanent magnet synchronous machine or an asynchronous machine.

3. The actuating device (22) according to claim 1 or 2, wherein the control member (31) is configured to control the operation of the inverter (28) according to a predetermined control law dependent of the speed of the engine (18).

4. The actuating device (22) according to claim 3, wherein the control member (31) is configured to receive speed information relating to a current drive speed at which each pump (20) is driven, the control member (31) also being configured, when the speed of the engine (18) is lower than the predetermined speed, to:
- compare the current drive speed with a predetermined target drive speed;
- control the inverter (28) in order to deliver, for each corresponding input stator winding (36), a voltage whose frequency and amplitude depend, each, on a difference between the current drive speed and the target drive speed.

5. The actuating device (22) according to claim 4, wherein the target drive speed follows a predetermined time profile, or is a predetermined constant.

6. The actuating device (22) according to claim 4 or 5, wherein the control member (31) is configured to control the inverter (28) according to a so-called "V to f" control law.

7. The actuating device (22) according to any one of claims 3 to 5, wherein the control member (31) is configured to control the inverter (28) so that a frequency of a power supply voltage of the motor rotating electric machine (24) delivered by the inverter (28) has a predetermined evolution over time.

8. A fuel pumping system (12) comprising at least one pump (20) and an actuating device according to any one of claims 1 to 7, the first rotor (32) of the motor rotating electric machine (24) being mechanically coupled to each pump (20) for its actuation thereof.

9. An aircraft carrying a fuel pumping system (12) according to claim 8, each pump (20) being inserted between a fuel circuit (14) of the aircraft and a fuel injection member (16) of an engine (18) of the aircraft, the second rotor (38) of the generator rotating electric machine (26) being mechanically coupled to a shaft (37) of the engine (18).

10. A method of supplying fuel to an engine (18) of an aircraft according to claim 9, the supply method including the selective connection of each input stator winding (36) of the motor rotating electric machine (24):
- to the corresponding output stator winding (42) if the speed of the engine (18) is higher than or equal to a predetermined speed;
- at the corresponding output (44) of the inverter (28), otherwise.
